# EUROPEAN PATENT APPLICATION

(11) **EP 1 545 070 A1**
(43) Date of publication of application: **22.06.2005**
(21) Application number: 03293203.0
(22) Date of filing: 18.12.2003
(51) Int. Cl.: H04L 12/56

(54) **Network with spanning tree for guiding information**

(71) Applicant: ALCATEL, 75008 Paris (FR)
(72) Inventor: Bouchat, Christele, 2060 Borgerhout (BE); Van Den Bosch, Sven Josef Jeanne, 9080 Lochristi (BE); Six, Erwin Alfons Constant, 9270 Kalken (BE); Janssens, Nico Alfred Anna, 9290 Overmere (BE)
(74) Representative: Plas, Axel

(57) **Abstract**

Networks (1) comprising primary spanning trees (11-18) for guiding information are provided with failure detectors (42) for detecting link or node (interface) failures in the primary spanning trees (11-18) and with backup spanning trees (21-28) for, in response to failure detection results, guiding the information via at least a part of the backup spanning tree (21-28), to respond quickly to such failures. The information comprises tags mapped to the primary spanning trees (11-18). The networks (1) or nodes (2-10) further comprise tag modifiers (43) for, in response to failure detection results, modifying the tags, with modified tags being mapped to the backup spanning trees (21-28) to inform other nodes (2-10) that the backup spanning trees (21-28) are to be used. The tag comprises a virtual local area network tag comprising at least one modifiable bit for indicating the spanning tree (11-18,21-28) to be used.

## Description

The invention relates to a network comprising
- a primary spanning tree for guiding information from a source to a destination via at least a part of the primary spanning tree.

Examples of such a network are Ethernet networks comprising nodes like switches, routers, bridges, multiplexers etc.

A prior art network is of common general knowledge and comprises a more or less meshed network of nodes. Without a presence of a spanning tree, each information arriving at a specific node is broadcasted to all other nodes coupled to this node. This results in large inefficiencies like for example loops. To avoid such inefficiencies, a spanning tree protocol is run. This spanning tree protocol defines a spanning tree for guiding the information from a source to a destination via at least a part of the primary spanning tree. Instead of broadcasting the information to all other nodes coupled to the specific node, the information is sent to only one or only a few nodes coupled to the receiving node and located on the spanning tree, which is more efficient.

The known network is disadvantageous, inter alia, because, in case of a failure in the spanning tree, like a link failure or a node (interface) failure, the spanning tree protocol must reconverge to reconfigure the spanning tree in such a way that the information can be sent to its destination. This reconvergence can be relatively time-consuming due to comprising failure detection, medium access control table flush and/or re-learning. Until the spanning tree has been reconfigured, the information must be buffered or is lost.

It is an object of the invention, inter alia, to provide a network as defined in the preamble which responds to failures in the spanning tree relatively quickly.

The network according to the invention is characterised in that the network further comprises
- a failure detector for detecting a failure in the primary spanning tree; and
- a backup spanning tree for, in response to a failure detection result, guiding the information via at least a part of the backup spanning tree.

By introducing a detection of a failure in the primary spanning tree and in response guiding the information via at least a part of a backup spanning tree already existing, the network according to the invention responds quickly to failures in the primary spanning tree. The backup spanning tree offers an alternative to the primary spanning tree.

The detection of a failure in the primary spanning tree like a link failure or a node (interface) failure may be a direct (physical layer) detection like a loss of light detection etc. or may be an indirect detection like a reception of a failure message from an other part of the network etc. The information comprises for example (a part of) a frame, (a part of) a packet, (a part of) a message or (a part of) a packetised message.

An embodiment of the network according to the invention is characterised in that the information comprises a tag mapped to the primary spanning tree, with a modified tag being mapped to the backup spanning tree, which network further comprises a tag modifier for, in response to a failure detection result, modifying the tag.

Usually a tag is mapped to the primary spanning tree, which means that the tag defines the forwarding or switching table to be used in accordance with the primary spanning tree for forwarding or switching the information. Such a tag is further related to the source and the destination of the information. By modifying this tag in response to the failure detection result, the tag can indicate which spanning tree is used, for example to inform further nodes. A further node comprises a tag detector for detecting (a part of) the tag for selecting the proper forwarding or switching table to be used.

Three options exist for guiding the information. According to a first option, the backup spanning tree is used all the way to the destination. According to a second option, each node checks whether it forms part of the primary spanning tree or the backup spanning tree, and in case it forms part of both spanning trees and it has not made a failure detection in the primary spanning tree, the primary spanning tree is to be used again. According to a third option, each node checks whether the primary spanning tree has been reconfigured already and whether it forms part of the reconfigured primary spanning tree or the backup spanning tree, and in case it forms part of both spanning trees and it has not made a failure detection in the reconfigured primary spanning tree, the reconfigured primary spanning tree is to be used.

An embodiment of the network according to the invention is characterised in that the tag comprises a virtual local area network tag comprising at least one modifiable bit for indicating the spanning tree to be used.

By modifying only a smaller part of the tag, like for example one or two bits of two bytes or sixteen bits of a virtual local area network tag, and by not modifying a larger part of the tag, like for example fourteen or fifteen bits of the two bytes or the sixteen bits of the virtual local area network tag, the smaller part indicates the spanning tree to be used, and the larger part can keep its original function.

The primary and the backup spanning tree do not need to be node disjoint and link disjoint in order to provide full protection. If full protection with a single backup spanning tree is not possible, multiple backup spanning trees may be used depending on the location of the failure. This may still not require more than a single bit to indicate the failure, under the condition that extra intelligence is added to the network.

The invention further relates to a node for use in a network comprising a primary spanning tree for guiding information from a source to a destination via at least a part of the primary spanning tree, which node forms part of the primary spanning tree.

The node according to the invention is characterised in that the node comprises a failure detector for detecting a failure in the primary spanning tree, which node further forms part of a backup spanning tree for, in response to a failure detection result, guiding the information via at least a part of the backup spanning tree.

The invention also relates to a method for use in a network and comprising the step of
- guiding information from a source to a destination via at least a part of a primary spanning tree.

The method according to the invention is characterised in that the method further comprises the steps of
- detecting a failure in the primary spanning tree; and
- in response to a failure detection result, guiding the information via at least a part of a backup spanning tree.

The invention relates too to a processor program product for use in a node and comprising the function of
- guiding information from a source to a destination via at least a part of a primary spanning tree, which node forms part of the primary spanning tree.

The processor program product according to the invention is characterised in that the processor program product further comprises the function of
- detecting a failure in the primary spanning tree; and
- in response to a failure detection result, guiding the information via at least a part of a backup spanning tree, which node further forms part of the backup spanning tree.

Embodiments of the node according to the invention and of the method according to the invention and of the processor program product according to the invention correspond with the embodiments of the network according to the invention.

The invention is based upon an insight, inter alia, that a reconfiguration of a primary spanning tree is relatively time-consuming, and is based upon a basic idea, inter alia, that the reconfiguration can be avoided or can be by-passed or shortcircuited by introducing a backup spanning tree already available and to be used in response to a failure detection in the primary spanning tree.

The invention solves the problem, inter alia, to provide a network which responds to failures in the primary spanning tree relatively quickly, and is advantageous, inter alia, in that the information to be sent from the source to the destination suffers relatively little from failures in the primary spanning tree.

These and other aspects of the invention will be apparent from and elucidated with reference to the embodiments(s) described hereinafter.
Fig. 1 shows in block diagram form a network according to the invention comprising nodes according to the invention; and
Fig. 2 shows in block diagram form a node according to the invention.

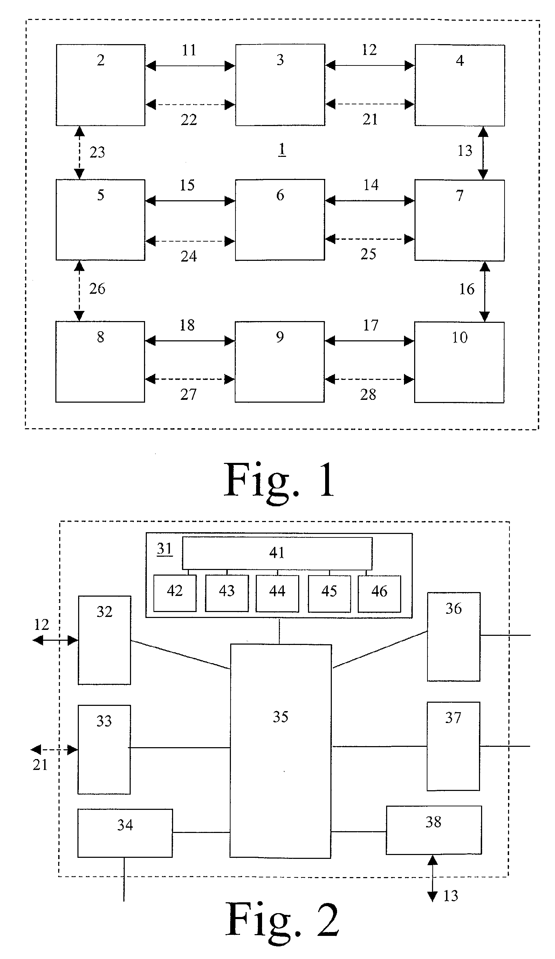

The block diagram of the network 1 according to the invention as shown in Fig. 1 comprises nine nodes 2-10. A primary spanning tree 11-18 comprises links 11-18 for coupling the node 2 to the node 3 (arrow 11), the node 3 to the node 4 (arrow 12), the node 4 to the node 7 (arrow 13), the node 7 to the node 6 (arrow 14) and to the node 10 (arrow 16), the node 6 to the node 5 (arrow 15), the node 10 to the node 9 (arrow 17) and the node 9 to the node 8 (arrow 18). So, the primary spanning tree 11-18 has its root in the node 7, with the links between the node 2 and the node 5, between the node 3 and the node 6, between the node 5 and the node 8 and between the node 6 and the node 9 being blocked. Instead of defining the primary spanning tree 11-18 by its links 11-18, the primary spanning tree 7,13,4,12,3,11,2-7,14,6,15,5-7,16,10,17,9,18,8 may also be defined by a combination of its links 11-18 and its nodes (node interfaces) 2-10 for example as seen from its root.

A secundary spanning tree 21-28 comprises links 21-28 for coupling the node 4 to the node 3 (arrow 21), the node 3 to the node 2 (arrow 22), the node 2 to the node 5 (arrow 23), the node 5 to the node 6 (arrow 24) and to the node 8 (arrow 26), the node 6 to the node 7 (arrow 25), the node 8 to the node 9 (arrow 27) and the node 9 to the node 10 (arrow 28). So, the secundary spanning tree 21-28 has its root in the node 5, with the links between the node 3 and the node 6, between the node 4 and the node 7, between the node 6 and the node 9 and between the node 7 and the node 10 being blocked. Instead of defining the secundary spanning tree 21-28 by its links 21-28, the secundary spanning tree 5,23,2,22,3,21,4-5,24,6,25,7-5,26,8,27,9,28,10 may also be defined by a combination of its links 21-28 and its nodes (node interfaces) 2-10 for example as seen from its root.

The network 1 for example corresponds with an Ethernet network comprising nodes 2-10 like switches, routers, bridges, multiplexers etc. In a prior art situation, there is only one spanning tree, the primary spanning tree 11-18 for guiding the information from a source like for example the node 2 to a destination like for example the node 10 via at least a part of the primary spanning tree 11-18. In case of a failure in the primary spanning tree 11-18, like a link failure or a node (interface) failure, a spanning tree protocol must reconverge to reconfigure the primary spanning tree in such a way that the information can be sent to its destination. This reconvergence can be relatively time-consuming. Until the spanning tree has been reconfigured, the information must be buffered or is lost disadvantageously.

According to the invention, the backup spanning tree 21-28 is present. A failure detector, for example located in each node 2-10 or only in some of the nodes 2-10 or elsewhere in the network 1, detects a failure in the primary spanning tree 11-18, like for example a link failure in link 13 or a node interface failure in a node interface coupled to link 13. This detection of a failure in the primary spanning tree 11-18 may be a direct (physical layer) detection like a loss of light detection etc. or may be an indirect detection like a reception of a failure message from an other part of the network etc. In response to the failure detection result, the information is guided via at least a part of the backup spanning tree 21-28. This information comprises for example (a part of) a frame, (a part of) a packet, (a part of) a message or (a part of) a packetised message. As a result, the information flows via the link 21, the node 3, the link 22, the node 2 and the link 23 to the node 5. Due to this node 5 being located on the primary spanning tree 11-18 without being used before (contrary to the nodes 2 and 3), at this location the primary spanning tree could for example take over again. All possible options defining how to continue are described below. By having introduced a detection of a failure in the primary spanning tree 11-18 and in response guiding the information via at least a part of a backup spanning tree 21-28 already existing, the network 1 according to the invention responds quickly to failures in the primary spanning tree 11-18.

It should be noted that prior art networks exist in which several spanning trees are used for load balancing. These several spanning trees are not (de)activated or switched in response to detections of failures.

The information comprises for example a tag mapped to the primary spanning tree 11-18, with a modified tag being mapped to the backup spanning tree 21-28. A tag modifier, for example located in each node 2-10 or only in some of the nodes 2-10 or elsewhere in the network 1, modifies the tag in response to a failure detection result. Usually a tag is mapped to the primary spanning tree 11-18, which means that the tag defines the forwarding or switching table to be used in accordance with the primary spanning tree 11-18 for forwarding or switching the information. Such a tag is further related to the source 2 and the destination 10 of the information. By modifying this tag in response to the failure detection result, the tag can indicate which spanning tree is used, for example to inform further nodes. A further node comprises a tag detector for detecting (a part of) the tag for selecting the proper forwarding or switching table to be used.

Three options exist for guiding the information. According to a first option, the backup spanning tree 21-28 is used all the way to the destination 10. According to a second option, each node 2-10 checks whether it forms part of the primary spanning tree or the backup spanning tree, and in case it forms part of both spanning trees and it has not made a failure detection in the primary spanning tree 11-18 (and in case it has not been used in the primary spanning tree 11-18 to reach the node 4 which has made the failure detection), the primary spanning tree 11-18 is to be used again. According to a third option, each node 2-10 checks whether the primary spanning tree has been reconfigured already and whether it forms part of the reconfigured primary spanning tree or the backup spanning tree 21-28, and in case it forms part of both spanning trees, the reconfigured primary spanning tree is to be used.

Preferably, the tag comprises a virtual local area network tag comprising at least one modifiable bit for indicating the spanning tree to be used. By modifying only a smaller part of the tag, like for example one or two bits of two bytes or sixteen bits of a virtual local area network tag, and by not modifying a larger part of the tag, like for example fourteen or fifteen bits of the two bytes or the sixteen bits of the virtual local area network tag, the smaller part indicates the spanning tree to be used, and the larger part can keep its original function. So, in a prior art situation, in case of four bits of the sixteen bits being used for indicating a non-address subject like for example a priority, twelve bits are used for indicating an address subject. According to the invention, for example one of the twelve bits is used for indicating the spanning tree to be used, leaving eleven bits for addressing purposes (slightly reduced address space).

The block diagram of the node 4 according to the invention as shown in Fig. 2 comprises a node interface 32 coupled to the link 12, a node interface 33 coupled to the link 21, a node interface 38 coupled to the link 13 and node interfaces 34,36,37 coupled to other links not shown in Fig. 1. Each interface 32-34,36-38 is coupled to a coupler 35, which is further coupled to a processor system 31 comprising a processor 41 including a memory and coupled to a failure detector 42, a tag modifier 43, a tag detector 44, a primary forwarding or switching table 45 and a backup forwarding or switching table 46. Units 32-38 may comprise buffers not shown.

The failure detector 42 detects for example a link failure in the link 13 by for example detecting a loss of light or by receiving a message from an other part of the network 1, or detects for example a node interface failure in its own node interface 38 or in an interface coupled to the other side of the link 13 by for example detecting a non-response from the node interface 38 or by receiving a message from node 7 that the node interface coupled to the other side of the link 13 does not function properly etc. In response to this failure detection, the tag of incoming information arriving via the link 12 and the node interface 32 is detected by the tag detector 44, and in case this incoming information had to be sent via the link 13 (as indicated by the primary forwarding or switching table 45), the backup spanning tree is chosen (as indicated by the backup forwarding or switching table 46), and the information is to be sent via the link 21. However, before being sent, the tag modifier modifies one bit of the twelve bits of the tag. As a result, the tag detector in nodes 3, 2 and 5 are able to detect that the backup forwarding or switching table is to be used for further guiding the information, instead of the primary forwarding or switching table, etc.

In the node 5, in case of the second option described before being chosen, the tag detector will detect the modified tag, whereby the non-modified part of the tag will indicate (directly or indirectly via a source/destination address part of the information) that this node 5 forms part of both the primary spanning tree 11-18 and the backup spanning tree 21-28, without this node 5 being used before for reaching the node 3 of the primary spanning tree, which node 3 had made the failure detection. In response, the tag modifier will modify the tag again such that it corresponds again with the original tag, and the information is guided via a part of the primary spanning tree 11-18 (in this case the links 15, 14 and 16) to its destination 10.

The expression "for" in for example "for guiding" and "for detecting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps/functions of guiding and detecting up do not exclude further steps, like for example, inter alia, the steps/functions described for Fig. 1 and 2 etc. Other networks than Ethernet networks are not to be excluded.

## Claims

1. Network (1) comprising
- a primary spanning tree (11-18) for guiding information from a source (2) to a destination (10) via at least a part of the primary spanning tree (11-18);
**characterised in that** the network (1) further comprises
- a failure detector (42) for detecting a failure in the primary spanning tree (11-18); and
- a backup spanning tree (21-28) for, in response to a failure detection result, guiding the information via at least a part of the backup spanning tree (21-28).

2. Network (1) as defined in claim 1, **characterised in that** the information comprises a tag mapped to the primary spanning tree (11-18), with a modified tag being mapped to the backup spanning tree (21-28), which network (1) further comprises a tag modifier (43) for, in response to a failure detection result, modifying the tag.

3. Network (1) as defined in claim 2, **characterised in that** the tag comprises a virtual local area network tag comprising at least one modifiable bit for indicating the spanning tree (11-18,21-28) to be used.

4. Node (2-10) for use in a network (1) comprising a primary spanning tree (11-18) for guiding information from a source (2) to a destination (10) via at least a part of the primary spanning tree (11-18), which node (2-10) forms part of the primary spanning tree (11-18), **characterised in that** the node (2-10) comprises a failure detector (42) for detecting a failure in the primary spanning tree (11-18), which node (2-10) further forms part of a backup spanning tree (21-28) for, in response to a failure detection result, guiding the information via at least a part of the backup spanning tree (21-28).

5. Node (2-10) as defined in claim 4, **characterised in that** the information comprises a tag mapped to the primary spanning tree (11-18), with a modified tag being mapped to the backup spanning tree (21-28), which node (2-10) further comprises a tag modifier (43) for, in response to a failure detection result, modifying the tag.

6. Node (2-10) as defined in claim 5, **characterised in that** the tag comprises a virtual local area network tag comprising at least one modifiable bit for indicating the spanning tree (11-18,21-28) to be used.

7. Method for use in a network (1) and comprising the step of
- guiding information from a source (2) to a destination (10) via at least a part of a primary spanning tree (11-18);
**characterised in that** the method further comprises the steps of
- detecting a failure in the primary spanning tree (11-18); and
- in response to a failure detection result, guiding the information via at least a part of a backup spanning tree (21-28).

8. Processor program product for use in a node (2-10) and comprising the function of
- guiding information from a source (2) to a destination (10) via at least a part of a primary spanning tree (11-18), which node (2-10) forms part of the primary spanning tree (11-18);
**characterised in that** the processor program product further comprises the function of
- detecting a failure in the primary spanning tree (11-18); and
- in response to a failure detection result, guiding the information via at least a part of a backup spanning tree (21-28), which node (2-10) further forms part of the backup spanning tree (21-28).
